# EUROPEAN PATENT SPECIFICATION

(11) **EP 1 429 626 B1**
(45) Date of publication and mention of the grant of the patent: **09.03.2011**
(21) Application number: 02760163.2
(22) Date of filing: 12.09.2002
(51) Int. Cl.: A23L 1/105, A23L 1/164, A23L 1/18, A21D 13/08

(54) **ENZYMATIC TREATMENT OF STARCHY FOOD PRODUCTS FOR SHORTENING THE TEMPERING STEP**
ENZYMATISCHE BEHANDLUNG VON STÄRKEHALTIGEN LEBENSMITTELPRODUKTEN ZUR VERKÜRZUNG DER TEMPERIERENZEIT
TRAITEMENT ENZYMATIQUE DE PRODUITS ALIMENTAIRES RICHES EN AMIDON DESTINE A RACCOURCIR L'ETAPE DE FRASAGE

(30) Priority: 18.09.2001 DK 200101354; 14.01.2002 DK 200200052
(43) Date of publication of application: 23.06.2004
(73) Proprietor: Novozymes A/S, 2880 Bagsvaerd (DK)
(72) Inventor: SPENDLER, Tina, DK-2730 Herlev (DK); NIELSEN, Jack, Bech, DK-2900 Hellerup (DK)
(74) Representative: Knudsen, Sten Lottrup
(86) International application number: PCT/DK2002/000596
(87) International publication number: WO 2003/024242

(56) References cited:
- CA-A- 2 015 149
- CA-A- 2 016 950
- US-A- 3 861 293
- US-A- 5 089 171
- US-A- 6 162 628

## Description

### FIELD OF THE INVENTION

The present invention relates to the preparation of an edible product from raw materials comprising starch and water by heating, cooling, holding and drying.

### BACKGROUND OF THE INVENTION

The preparation of some starch-based food products includes a holding step (sometimes known as tempering or ageing) intended to make the starch retrograde sufficiently to make the product acceptable for further processing. This may typically involve holding from 10 to 48 hours at room temperature.

An example is the production of certain snack products (sometimes called third-generation or 3G snacks) in a process including extrusion cooking, followed by cooling, holding and drying to make snack pellets which are expanded by heating (e.g. by frying in oil) to make the final snack product.

Another example is shredded cereals made by cooking whole grain (particularly wheat), followed by cooling, tempering, shredding, forming into biscuits and baking.

The ageing step is by nature a time and space consuming step, and a shortening of this step will give significant advantages to manufactures such as the possibility of reducing floor and rack space or increase production.

CA 2015149 and CA 2016950 relate to processes for preparing a shredded wheat product by use an isoamylase or an R-enzyme.

### SUMMARY OF THE INVENTION

The inventors have found that the addition of an endo-amylase to starch-based raw materials accelerates the retrogradation and thus allows a shortening of the holding period.
1. Accordingly, the invention provides a process for producing an edible product, comprising the following sequential steps:
   a) mixing an endo-amylase that can hydrolyze alpha-1,4 bonds in amylose in an endo-manner with raw materials comprising starch and up to 32% water,
   b) heating the mixture so as to gelatinize the starch,
   c) cooling and holding to effect retrogradation of the starch, and
   d) heating and drying.

### Food product

The food product may be snack pellets, a snack product (e.g. a third-generation snack), or shredded cereal (e.g. shredded wheat) for use as a breakfast cereal.

### Snack pellets and products

According to the invention, snack pellets may be produced by a process comprising the following sequential steps:
a) mixing an endo-amylase that can hydrolyze alpha-1,4 bonds in amylose in an endo-manner with raw materials comprising starch,
b) extruding and heating the mixture so as to at least partially gelatinize the starch,
c) cooling and holding to effect at least partial retrogradation of the starch, and
d) heating and drying.

The raw material mixture generally contains water, typically up to 32 % water (e.g. 20-32 %), and may optionally be preconditioned by heating, e.g. up to 95°C for 20-240 seconds.

The extrusion cooking may be done in a single-screw or double-screw extruder with a residence time of 30-90 seconds. The extruder will typically comprise a cooking zone at 80-150°C and a forming zone at 65-90°C. After the extrusion with heating, the mixture may be formed into long rods, typically having a temperature of 60-100 °C (particularly 70-95°C) and a moisture content of 25-30 % or 20-28 %. The holding (also termed aging) may take 8-24 hours (particularly 10-16 hours). Before or during the holding, the rods may be cooled, typically to 15-30°C. The holding serves to effect at least partial retrogradation of the starch, either of the amylose component, the amylopectin component or both. Advantageously, the endo-amylase added according to the invention accelerates the retrogradation, so that the holding time may be shortened. The end-point may be conventionally determined by testing the hardness and brittleness of the pellets.

After ageing, the rods may be cut into pellets.

The drying of the pellets may be done at 70-95°C for 1-3 hours to reach an exit moisture of 6-8 % in the snack pellets.

The dried snack pellets may be stored or distributed to a snack processor. The snack pellets may then be expanded by heating, e.g. by frying in oil or puffing in hot air or in microwave or infrared oven.

### Shredded cereals

According to the invention, shredded cereals may be produced by a process comprising the following sequential steps:
a) mixing an endo-amylase or a microbial pullulanase with raw materials comprising starch,
b) cooking so as to at least partially gelatinize the starch,
c) cooling and holding to effect at least partial retrogradation of the starch,
e) shredding, and
f) baking.

Shredded cereals may be made by cooking whole grain with the endo-amylase in water, followed by cooling, tempering, shredding, forming into biscuits and baking.

The whole grain may be wheat (e.g. white wheat), rice or corn. The cooking may be done for 30-35 minutes at atmospheric pressure or 2000 hPa to reach 45-50 % moisture after removal of excess water. The holding (or tempering) may take 8-28 hours with cooling to 15-30°C. After shredding, the shreds may be stacked to make a biscuit, and this may be baked at 200-315°C to around 4 % end moisture.

### Endo-amylase

The invention uses an enzyme which is an endo-amylase. The enzyme may suitably have a pH optimum in the range 5-9.

The enzyme may suitably have a temperature optimum in the presence of starch in the range of 30-90°C, preferably 50-80°C, particularly 55-75°C, e.g. 60-70°C. The temperature optimum may be measured in a 1 % solution of soluble starch at pH 5.5.

The enzyme is typically used at a dosage of 0.1-20 mg enzyme protein per kg of dry solids in the raw material, particularly 0.5-5 mg/kg.

The endo-amylase may be any enzyme that can hydrolyze alpha-1,4 bonds in amylose in an endo-manner (i.e. in the interior of the molecule). Examples of endo-amylases are alpha-amylase (EC 3.2.1.1) and maltogenic alpha-amylase (EC 3.2.1.133). The alpha-amylase may be derived from *Bacillus,* particularly *B. licheniformis* or *B. amyloliquefaciens.* The alpha-amylase may be used at a dosage of 1-100 KNU/kg raw material, e.g. 5-20 KNU/kg. The KNU (Kilo Novo Unit) for amylase activity is defined in WO 96/33267.

The maltogenic alpha-amylase may be derived from B. *stearothermophilus,* e.g. strain NCIB 11837 described in EP 120693, or it may be a variant described in US 6162628. The maltogenic alpha-amylase is typically used at a dosage of 20-5000 MANU per kg of dry solids in the raw materials, particularly100-1000 MANU/kg. The MANU unit is defined in US 6197352 B1.

### EXAMPLES

### Example 1: Use of endo-amylase in production of rod type snack pellets

Rod-type snack pellets were produced with addition of endo-amylase. The endo-amylase tested was a thermostable variant of a maltogenic alpha-amylase from *Bacillus,* described in US 6162628 at a dosage of 1000 MANU/kg of raw material. A control was made without addition of endo-amylase.

The following raw materials were mixed: Potato starch, wheat flour, maize flour, potato granules, salt, paprika, vegetable oil, emulsifier and flavouring.

The raw materials were treated by pre-conditioning at 20 - 95°C for 1-2 minutes followed by extrusion at 80 -150°C for 30-90 seconds, and forming at 65- 90°C into long rods.

After forming the rods were placed on racks and stored 16-24 hours before cutting. At the start of ageing the rods were rubber like and did not break when bended. A simple bending test was performed several times during storage, and the rods were judged to be ready for cutting when they readily broke at the bend point when bended.

Finally, the rods were cut and expanded by deep-frying in palm oil at 180°C for 9 - 11 seconds.

The results were that the rods made with the endo-amylase were ready after 18-19 hours whereas the control without endo-amylase was ready after 24 hours. The expanded pellets from the enzyme trials did not show any significant differences compared to the reference on physical parameters.

### Example 2: Effect on snack texture

Snack pellets were produced according to a sheeted pellet procedure with addition of three different endo-amylases.

The following raw materials were mixed: Potato granules, glucose, salt, vegetable oil, mono- and diglycerides as emulsifiers, and dicalciumphosphate.

The raw materials were treated by preconditioning at 20-80°C for 1-2 minutes, followed by extrusion at 80-130°C for 30-45 seconds, forming (sheeting) and drying of the single pellets. The pellets were allowed to rest for at least 24 hours to assure optimal water migration, before expansion. Expansion was done in palm oil at approximately 180°C for 9-11 seconds.

The texture was judged by a panel of 4 persons. The endo-amylase and dosage used and the observed effect were as follows:

| **Enzyme** | **Dosage/kg raw material** | **Effect** |
|---|---|---|
| *B. stearothermophilus* maltogenic alpha-amylase | 10000 MANU | Sample was more brown than reference. Some off flavour (Maillard reaction). |
| Thermostable maltogenic alpha-amylase variant | 500 MANU | Very crispy, brittle. |
| | 1000 MANU | Very crispy, brittleness more distinct at higher dosages |
| *B. licheniformis* alpha- amylase | 12 KNU(T) | Very firm surface. |

All the enzyme-treated products looked nicer than the reference with fewer, smaller and better distributed air bubbles after expansion.

## Claims

1. A process for producing an edible product, comprising the following sequential steps:
a) mixing an endo-amylase that can hydrolyze alpha-1,4 bonds in amylose in an endo-manner with raw materials comprising starch and up to 32% water,
b) heating the mixture so as to gelatinize the starch,
c) cooling and holding to effect retrogradation of the starch, and
d) heating and drying.

2. The process of the preceding claim, wherein the edible product is a snack food or a breakfast cereal.

3. The process of claim 2, wherein the edible product is a snack food, and wherein step (b) comprises heating and extruding the mixture so as to gelatinize the starch and form pellets.

4. The process of any of the claims 1 to 3 comprising:
e) producing snack pellets, followed by
f) heat treating the pellets, particularly by frying in oil, puffing in hot air, microwave or infrared oven.

## Patentansprüche

1. Verfahren zum Herstellen eines essbaren Erzeugnisses, umfassend die folgenden sequentiellen Schritte:
(a) Mischen einer endo-Amylase, die alpha-1,4-Bindungen in Amylose in einer endo-Weise hydrolysieren kann, mit Rohstoffen, die Stärke und bis zu 32% Wasser umfassen,
(b) Erhitzen der Mischung, um die Stärke zu gelieren,
(c) Abkühlen und Halten, um Retrogradation der Stärke zu bewirken, und
(d) Erhitzen und Trocknen.

2. Verfahren nach dem vorhergehenden Anspruch, wobei das essbare Erzeugnis ein Snack-Lebensmittel oder eine Frühstückszerealie ist.

3. Verfahren nach Anspruch 2, wobei das essbare Erzeugnis ein Snack-Lebensmittel ist, und wobei Schritt (b) Erhitzen und Extrudieren der Mischung umfasst, so dass die Stärke geliert und Pellets bildet.

4. Verfahren nach einem beliebiegen der Ansprüche 1 bis 3, umfassend:
(e) Herstellen von Snack-Pellets, gefolgt von
(f) Hitzebehandeln der Pellets, insbesondere durch Frittieren in Öl, Austreiben in Heissluft, einer Mikrowelle oder einem Infrarotofen.

## Revendications

1. Procédé pour la production d'un produit comestible, comprenant les étapes séquentielles suivantes:
a. mélange d'une endoamylase qui peut hydrolyser les liaisons alpha-1,4 dans l'amylose de façon endo avec des matériaux bruts comprenant de l'amidon et jusqu'à 32% d'eau,
b. chauffage du mélange de façon à gélatiniser l'amidon,
c. refroidissement et attente pour obtenir l'effet de rétrogradation de l'amidon, et
d. chauffage et séchage.

2. Procédé selon la revendication 1, le produit comestible étant un amuse-gueule ou des céréales pour petit-déjeuner.

3. Procédé selon la revendication 2, dans lequel le produit comestible est un amuse-gueule, et dans lequel l'étape (b) comprend le chauffage et l'extrusion du mélange de façon à gélatiniser l'amidon et former des granulés.

4. Procédé selon l'une quelconque des revendications 1 à 3 comprenant:
e. la production de granulés d'amuse-gueule, suivi du
f. traitement par chauffage des granulés, en particulier par friture dans l'huile, soufflement sous air chaud, four à microonde ou infrarouge.
